(19) Europäisches Patentamt
European Patent Office
Office européen des brevets

(11) **EP 3 515 850 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(21) Anmeldenummer: **17778193.7**

(22) Anmeldetag: **14.09.2017**

(51) Int Cl.:
**B66B 11/04** *(2006.01)*

(86) Internationale Anmeldenummer:
**PCT/EP2017/073079**

(87) Internationale Veröffentlichungsnummer:
**WO 2018/054747 (29.03.2018 Gazette 2018/13)**

(54) **TRANSPORTEINRICHTUNG MIT EINER SICHERHEITSEINRICHTUNG ZUR VERZÖGERUNGSBEGRENZUNG**

TRANSPORTATION DEVICE COMPRISING A SAFETY DEVICE FOR LIMITING DECELERATION

DISPOSITIF DE TRANSPORT COMPRENANT UN DISPOSITIF DE SÉCURITÉ DESTINÉ À LIMITER LE RALENTISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2016 DE 102016118028**

(43) Veröffentlichungstag der Anmeldung:
**31.07.2019 Patentblatt 2019/31**

(73) Patentinhaber: **thyssenkrupp Elevator Innovation and Operations AG**
**45143 Essen (DE)**

(72) Erfinder:
- THUM, Richard
  **70806 Kornwestheim (DE)**
- MATZ, Marius
  **70794 Filderstadt (DE)**
- STEINHAUER, Eduard
  **72622 Nürtingen (DE)**

(74) Vertreter: **Jacobi, Nicolas et al**
**TK Elevator GmbH**
**ThyssenKrupp Allee 1-Q5**
**45143 Essen (DE)**

(56) Entgegenhaltungen:
**US-A1- 2004 216 960**

## Beschreibung

Die vorliegende Erfindung betrifft eine Transporteinrichtung mit einer Sicherheitseinrichtung zur Verzögerungsbegrenzung.

Stand der Technik

Transporteinrichtungen, insbesondere Aufzuganlagen, Fahrtreppen und Fahrsteige ohne Seilzüge und Kettentriebe verfügen bisweilen über elektromagnetische Linearantriebe, die es erlauben, Aufzugskabinen individuell über vertikale wie auch horizontale Fahrwegabschnitte zu bewegen und Fahrsteigpaletten oder Fahrtreppenpaletten individuell ohne Kettenverbund entlang des Fahrweges zu transportieren. Elektromagnetische Linearantriebe weisen hierbei wenigstens einen ortsfesten linearen Stator, der in mehreren parallelen oder sequentiellen Statorsegmenten mit separaten Statorwicklungen entlang des Fahrwegs, beispielsweise in einem Aufzugsschacht, montiert ist und wenigstens einen linearen Läufer, der im Sinne der vorliegenden Erfindung einem Fahrkorb oder einer Palette entspricht, auf.

Anstelle des Fahrkorbs oder der Palette wird daher der Läufer betrachtet. Der Läufer steht mit dem Stator in einer berührungsfreien, aber möglichst engen magnetischen Kopplung, um eine möglichst große Kraftwirkung des durch den Stator erzeugten Wanderfeld und einen möglichst starken und konzentrierten magnetischen Fluss im Kern des Stators und im Läufer zu erzeugen. Dabei werden typischerweise Permanentmagnetläufer eingesetzt, damit keine elektrische Energieübertragung auf den Läufer erforderlich ist und statische magnetische Haltekräfte realisiert werden können. Es handelt sich dabei um einen sogenannten Synchronantrieb.

Ein Kurzschluss in einem Statorsegment eines Linearantriebs kann durch starke, in der Statorwicklung induzierte Wirbelströme ähnlich dem Wirkprinzip einer Wirbelstrombremse bei der Überfahrt zu übermäßigen, nicht erwünschten Verzögerungen des Läufers und somit des Fahrkorbs führen. Sind die Verzögerungen so stark, dass sie z.B. die Erdbeschleunigung übersteigen, besteht für die beförderten Personen und Lasten insbesondere bei Aufwärtsfahrt eine erhebliche Unfallgefahr. Neben einem Wicklungskurzschluss können auch mechanische Störungen wie z.B. Verklemmungen und Kollisionen zwischen Stator und Läufer zu gravierenden Verzögerungen mit Unfallgefahr führen.

Unfallgefahren bestehen auch bei Fahrtreppen und Fahrsteigen, wenn Paletten durch elektrische oder mechanische Fehler abrupt angehalten werden. Diese Gefahren sind bei individuell angetriebenen Paletten noch größer als bei verketteten Fahrtreppen und Fahrsteigen, da höhere Geschwindigkeiten erreicht werden. Im Vergleich zu vertikalen Aufzuganlagen sind für horizontal fahrende Transportsysteme die zulässigen Verzögerungskräfte zudem deutlich geringer.

Aus der Aufzugstechnik mit Linearantrieb sind automatische Sicherheitsbremsen bekannt, die sich bei einer ungewollten Abwärtsbewegung automatisch schließen und bei einer Aufwärtsbewegung automatisch öffnen. Entsprechende Sicherheitsbremssysteme zeigen die Dokumente US5234079A und US6425462B1. US 2004/216960 A1 offenbart den Oberbegriff des Anspruchs 1.

Es ist wünschenswert, elektromagnetische Linearantriebe mit einer Sicherheitseinrichtung zur Verzögerungsbegrenzung und Transporteinrichtungen mit einem solchen Linearantrieb zur Verfügung zu haben, wobei die Sicherheitseinrichtung bei einer elektrischen oder mechanischen Störung des Linearantriebs selbsttätig eingreift und zur Ausführung der Sicherheitsfunktion keine eigene Energieversorgung und Aktivierung benötigt.

Offenbarung der Erfindung

Erfindungsgemäß wird eine Transporteinrichtung mit den Merkmalen des Patentanspruchs 1 vorgeschlagen. Vorteilhafte Ausgestaltungen sind Gegenstand der Unteransprüche sowie der nachfolgenden Beschreibung.

Eine erfindungsgemäße Transporteinrichtung, nämlich eine Aufzugsanlage, eine Fahrtreppe oder ein Fahrsteig, umfasst eine Personenbeförderungseinheit, nämlich einen Fahrkorb bzw. eine Palette, und einen elektromagnetischen Linearantrieb zum Antreiben der Personenbeförderungseinheit, der wenigstens einen Stator und wenigstens einen Läufer aufweist, wobei der Stator wenigstens ein Statorsegment aufweist und der Läufer wenigstens ein Läuferelement aufweist, wobei der Läufer vermittelt durch das Läuferelement durch die Kraftwirkung eines elektromagnetischen Feldes des überfahrenen Statorsegments in einer ersten Antriebsrichtung oder in einer entgegengesetzten zweiten Antriebsrichtung antreibbar ist, und wobei das Läuferelement an dem Läufer mittels einer Sicherheitseinrichtung derart beweglich gelagert ist, dass ein Luftspalt zwischen dem überfahrenen Statorsegment und dem Läuferelement in Abhängigkeit von einer auf die Personenbeförderungseinheit wirkenden Beschleunigung bzw. Verzögerung veränderlich ist.

Der magnetische Widerstand innerhalb des Luftspaltes ist im Wesentlichen durch folgenden mathematischen Zusammenhang definiert:

$$R_m = \frac{l}{\mu_0\, \mu_r\, A}$$

wobei

l       Luftspaltlänge (längs zur Flussrichtung)
$\mu_0$       die Permeabilität von Vakuum,
$\mu_r$       die relative Permeabilität von Luft, und

A    die Querschnittsfläche des Luftspaltes (quer zur Flussrichtung) ist.

Da Luft eine um etwa $10^4$ -fache größere Permeabilität als Eisen aufweist, wächst der magnetische Widerstand im Luftspalt sehr stark an, wenn bereits geringfügig die Länge des Luftspalts vergrößert und/oder die Querschnittsfläche des Luftspalts verkleinert wird.

Die erfindungsgemäße Transportvorrichtung hat den Vorteil einer höheren Sicherheit und Zuverlässigkeit gegenüber dem Stand der Technik, da bei einem Erreichen oder Überschreiten einer voreingestellten Beschleunigung bzw. Verzögerung die Kraftwirkung des überfahrenen Statorsegments auf das Läuferelement und damit auf den Läufer durch eine Veränderung des Luftspaltes selbsttätig unterbrochen wird. Vorteilhaft benötigt diese Sicherheitseinrichtung keine eigene Energieversorgung und keine aktive Ansteuerung. Da bei einem Erreichen oder Überschreiten einer voreingestellten Beschleunigung bzw. Verzögerung nur das überfahrene Statorsegment deaktiviert wird, bleibt die Funktionsfähigkeit der Transporteinrichtung insgesamt bei ausreichender Redundanz und Dimensionierung der Statorsegmente erhalten.

Gemäß einer vorteilhaften Ausführungsform ist das Läuferelement mittels der Sicherheitseinrichtung zwischen einer ersten Stellung und einer zweiten Stellung beweglich gelagert. In vorteilhafter Weise wird dadurch bei einem Erreichen oder Überschreiten einer voreingestellten Beschleunigung bzw. Verzögerung des Läuferelements die Kopplung zwischen Läuferelement und Statorsegment aufgehoben, so dass die Beschleunigung bzw. Verzögerung nicht auf den Fahrkorb bzw. die Palette übertragen werden kann.

Um gleichzeitig die magnetische Kopplung zwischen dem einen Läuferelement und dem einen Statorsegment in vorteilhafter Weise aufzuheben, ist gemäß einer weiteren vorteilhaften Ausführungsform der der magnetische Widerstand im Luftspalt zwischen dem überfahrenen Statorsegment und dem Läuferelement in der ersten Stellung kleiner ist als in der zweiten Stellung.

Gemäß einer vorteilhaften Ausführungsform ist das Läuferelement derart ausgestaltet, dass das Läuferelement bei Antrieb in der ersten Antriebsrichtung, insbesondere in Aufwärtsrichtung bzw. Vorwärtsrichtung, bzw. bei Verzögerung in der zweiten Antriebsrichtung, zumindest oberhalb eines vorbestimmten Beschleunigungswertes bzw. Verzögerungswertes, in die erste Stellung beaufschlagt wird. Dadurch kann die Länge des Luftspalts kleiner werden und/oder die Querschnittsfläche des Luftspaltes größer werden, was eine Kraftübertragung zwischen Stator und Läufer ermöglicht bzw. vergrößert, wenn der Läufer, nämlich der Fahrkorb oder die Palette, in der ersten Antriebsrichtung, insbesondere aufwärts bzw. vorwärts, angetrieben oder in der zweiten Antriebsrichtung, insbesondere abwärts oder rückwärts, verzögert wird. In beiden Fällen wirkt auf den Läufer, nämlich auf den Fahrkorb oder die Palette, eine Antriebskraft in der ersten Antriebsrichtung, insbesondere aufwärts bzw. vorwärts.

Gemäß einer weiteren vorteilhaften Ausführungsform wird das Läuferelement bei Antrieb in der zweiten Antriebsrichtung, insbesondere in Abwärtsrichtung oder Rückwärtsrichtung, bzw. bei Verzögerung in der ersten Antriebsrichtung, zumindest oberhalb eines vorbestimmten Beschleunigungswertes bzw. Verzögerungswertes, in die zweite Stellung beaufschlagt. Dadurch kann die Luftspaltlänge größer und/oder die Querschnittsfläche des Luftspaltes kleiner werden und eine Kraftübertragung zwischen Stator und Läufer verhindert bzw. verkleinert wird, wenn der Läufer, nämlich der Fahrkorb oder die Palette, in der zweiten Antriebsrichtung, insbesondere abwärts bzw. rückwärts, angetrieben oder in der ersten Antriebsrichtung, insbesondere aufwärts oder vorwärts, verzögert wird. In beiden Fällen wirkt auf den Läufer, nämlich auf den Fahrkorb oder die Palette, eine Antriebskraft in der zweiten Antriebsrichtung, insbesondere abwärts bzw. rückwärts.

Vorzugsweise erfolgt eine Beaufschlagung des Läuferelementes in die erste bzw. zweite Stellung durch die zwischen dem Statorsegment und dem Läuferelement vorliegende Antriebskraft selbst. Dadurch wird der Aufbau der Sicherheitseinrichtung in vorteilhafter Weise vereinfacht und die Zuverlässigkeit erhöht.

Vorzugsweise ist das Läuferelement abweichend von der Antriebsrichtung, insbesondere quer oder schräg zur Antriebsrichtung, insbesondere unter einem vorbestimmten Winkel zur Antriebsrichtung oder auf einer vorbestimmten Bahnkurve oder auf einem vorbestimmten Kreisbogensegment bewegbar, wobei der vorbestimmte Winkel zwischen der Bewegungsrichtungen des Läuferelements und der Antriebsrichtung insbesondere zwischen 5 und 45 Grad, vorzugsweise zwischen 15 und 30 Grad beträgt. Vorteilhaft wird hierdurch eine geeignete Zwangskraft bewirkt, die das Läuferelement aus dem Kraftfeld des Stators herausführen kann.

Vorzugsweise ist das Läuferelement geradlinig verschiebbar und/oder verschwenkbar. Diese Ausführung bietet den Vorteil eines besonders einfachen und zuverlässigen Aufbaus.

Gemäß einer vorteilhaften Ausführungsform wird das Läuferelement mittels der Sicherheitseinrichtung bei einem Wechsel der Antriebsrichtung, zumindest oberhalb eines vorbestimmten Beschleunigungswertes bzw. Verzögerungswertes, durch eine selbsttätig wirkende mechanische Zwangskraft aus dem Kraftfeld des überfahrenen Statorsegments herausbewegt. In vorteilhafter Weise wird für die Sicherheitseinrichtung daher keine aktive Ansteuerung und kein aktiver Stellantrieb benötigt, vielmehr wird die Sicherheitsfunktion durch eine Zwangskraft aus der bereitgestellten Antriebskraft des Stators bewirkt.

Gemäß einer vorteilhaften Ausführungsform ist das Läuferelement an dem Läufer mittels der Sicherheitseinrichtung zwischen einer ersten Stellung und einer zweiten Stellung derart beweglich gelagert, dass die Lagerung aufeinander abge-stimmte Elemente, insbesondere ineinandergreifende Elemente, aufweist, die Re-lativbewegungen zwischen dem Läuferelement und dem Läufer mit einem oder mehreren vorbestimmten mechanischen Freiheitsgraden ermöglichen und diese Relativbewegungen durch mechanische Zwangskräfte führen. Hierbei können in vorteilhafter Weise verschiedene Kombinationen mechanisch aufeinander abgestimmter Elemente, wie z.B. Bolzen und Langlöcher, Walzen und Schienen oder aufeinander gleitende Schienen oder Führungselemente verwendet werden. Diese haben den Vorteil, dass die Sicherheitsfunktion umkehrbar ist, ohne dass eine Wartung oder Instandsetzung der Transporteinrichtung zwingend erforderlich ist.

Gemäß einer weiteren vorteilhaften Ausführungsform ist das Läuferelement an dem Läufer mittels der Sicherheitseinrichtung zwischen einer ersten Stellung und einer zweiten Stellung derart gelagert ist, dass die Lagerung eine oder mehrere Sollbruchstellen aufweist, die bei Überschreiten vorgegebener Beschleunigungskräfte oder Verzögerungskräfte trennbar sind. Dabei können die abtrennbaren Einheiten durch Fangseile gesichert werden. Diese Ausführungsform hat den Vorteil noch höherer Zuverlässigkeit auch bei extrem großen Beschleunigungs- bzw. Verzögerungskräften.

Gemäß einer vorteilhaften Ausführungsform weist der Läufer wenigstens zwei parallele Langlöcher auf, die in einem spitzen Winkel zu der Bewegungsrichtung des Läufers angeordnet sind, wobei das Läuferelement durch wenigstens zwei beabstandete Bolzen in den parallelen Langlöchern derart verschiebbar gelagert ist, dass das Läuferelement bei einem Erreichen oder Überschreiten einer voreingestellten Verzögerung des Läuferelements durch eine Verschiebung in den parallelen Langlöchern von dem überfahrenen Statorsegment entfernt und aus dem elektromagnetischen Feld des überfahrenen Statorsegments herausgeführt wird. Durch die Veränderung des Luftspaltes zwischen dem fehlerhaften Statorsegment und dem Läuferelement gemäß dieser vorteilhaften Ausführungsform wird die Kraftwirkung auf den Läufer unterbrochen und eine nicht erwünschte Verzögerung des Läufers und somit des Fahrkorbs vermieden. Die Langlöcher sind am Läufer angeordnet, die Bolzen am beweglichen Läuferelement. Diese vorteilhafte Ausführungsform weist einen einfachen Aufbau und eine hohe Funktionssicherheit auf.

Gemäß einer vorteilhaften Ausführungsform weist das Läuferelement wenigstens zwei parallele Langlöcher auf, die in einem spitzen Winkel zu der Bewegungsrichtung des Läufers angeordnet sind, wobei der Läufer durch wenigstens zwei beabstandete Bolzen in den parallelen Langlöchern derart verschiebbar gelagert ist, dass das Läuferelement bei einem Erreichen oder Überschreiten einer voreingestellten Verzögerung des Läuferelements durch eine Verschiebung in den parallelen Langlöchern von dem überfahrenen Statorsegment entfernt und aus dem elektromagnetischen Feld des überfahrenen Statorsegments herausgeführt wird.

Durch die Veränderung des Luftspaltes zwischen dem fehlerhaften Statorsegment und dem Läuferelement gemäß dieser vorteilhaften Ausführungsform wird die Kraftwirkung auf den Läufer unterbrochen und eine nicht erwünschte Verzögerung des Läufers und somit des Fahrkorbs vermieden. Die Langlöcher sind am beweglichen Läuferelement angeordnet, die Bolzen am Läufer. Diese vorteilhafte Ausführungsform weist ebenfalls einen einfachen Aufbau und eine hohe Funktionssicherheit auf.

Gemäß einer weiteren vorteilhaften Ausführungsform ist das Läuferelement mittels Dreharmen am Läufer angeordnet. Diese vorteilhafte Ausführungsform weist einen einfachen Aufbau und einen besonders geringen Wartungsaufwand auf und kann mit verschiebbaren Anordnungen kombiniert werden.

Vorzugsweise ist das Läuferelement ein permanentmagnetisches Läuferelement. Vorteilhaft ist bei einem Permanentmagnetläufer keine Übertragung elektrischer Energie auf den Läufer erforderlich.

Vorzugsweise weist die Lagerung des Läuferelements in beiden vorstehenden Ausführungsformen eine Endposition auf, so dass die Sicherheitseinrichtung nur in einer Fahrtrichtung, insbesondere nur bei Aufwärtsfahrt wirksam sein kann. Im Falle der Ausführungsform mit Langlöchern ist eine solche Endposition durch die oberen Begrenzungen der Langlöcher gegeben. Im Falle der Ausführungsform mit parallel angeordneten Dreharmen wird eine mechanische Drehwinkelbegrenzung vorgeschlagen. Dadurch wird in vorteilhafter Weise eine Verzögerungsbegrenzung bei Aufwärtsfahrt ermöglicht, während eine Verzögerungsbegrenzung im Falle einer Notbremsung bei Abwärtsfahrt nicht erfolgt.

Gemäß einer weiteren vorteilhaften Ausführungsform weist die Lagerung des Läuferelements Dämpferelemente auf. Dadurch werden in vorteilhafter Weise mechanische Belastungen der Transporteinrichtung verringert.

Gemäß einer weiteren vorteilhaften Ausführungsform weist die Lagerung des Läuferelements Rückstellelemente auf. Dadurch kann das Läuferelement in vorteilhafter Weise, bei entfallener Beaufschlagung in die zweite Stellung, in die erste Stellung beaufschlagt werden.

Gemäß einer weiteren vorteilhaften Ausführungsform entspricht die voreingestellte Verzögerung des Läuferelements bei Aufwärtsfahrt maximal der Erdbeschleunigung. Diese Voreinstellung hat den Vorteil, dass auf die beförderten Personen oder Gegenstände wirkende Gewichtskräfte durch Verzögerungskräfte nicht vollständig aufgehoben oder umgekehrt werden können.

Weitere Vorteile und Ausgestaltungen der Erfindung ergeben sich aus der Beschreibung und den beiliegenden Zeichnungen.

Die Erfindung ist anhand von Ausführungsbeispielen in den Zeichnungen schematisch dargestellt und wird im Folgenden unter Bezugnahme auf die Zeichnungen beschrieben.

Figurenbeschreibung

Figur 1 zeigt als Beispiel einer Transporteinrichtung eine Aufzuganlage, die mit einer ersten bevorzugten Ausführungsform des erfindungsgemäßen Linearantriebs ausgebildet ist.

Figur 2 zeigt als weiteres Beispiel einer Transporteinrichtung eine Aufzuganlage, die mit einer weiteren bevorzugten Ausführungsform des erfindungsgemäßen Linearantriebs ausgebildet ist.

Figur 3 visualisiert die Vergrößerung des magnetischen Widerstandes durch Verringerung der Querschnittsfläche des Luftspaltes.

Figur 4 visualisiert die Vergrößerung des magnetischen Widerstandes durch Vergrößerung der Länge des Luftspaltes.

Detaillierte Beschreibung der Zeichnungen

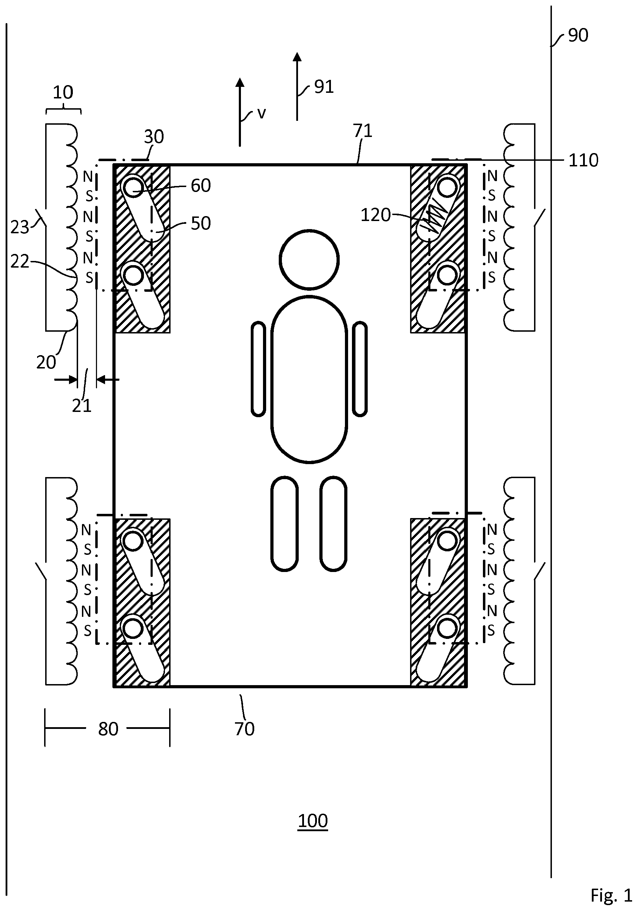

In Figur 1 ist als erfindungsgemäße Transporteinrichtung eine Aufzuganlage schematisch dargestellt und insgesamt mit 100 bezeichnet. Die Aufzuganlage 100 weist als Personenbeförderungseinheit einen Fahrkorb 71 auf, der in einem Aufzugsschacht 90 in Aufwärtsrichtung 91 und Abwärtsrichtung 92 vertikal bewegbar ist. Gleichermaßen, aber nicht ausführlich dargestellt, kann die Transporteinrichtung ein Fahrsteig oder eine Fahrtreppe mit einer Palette 71 als Personenbeförderungseinheit sein.

Die Aufzuganlage 100 ist mit einem Linearantrieb 80 ausgebildet. Dieser weist wenigstens einen Stator 10 und wenigstens einen Läufer 70 auf, wobei jeder Stator 10 wenigstens ein Statorsegment 20 und jeder Läufer 70 wenigstens ein Läuferelement 30 aufweist. Jedes Statorsegment 20 weist eine separate Statorwicklung 22 auf, wobei ein möglicher Wicklungskurzschluss in dieser Statorwicklung durch einen Schalter 23 angedeutet ist. Das Läuferelement 30 ist vorzugsweise als Permanentmagnet ausgebildet. Denkbar wäre auch ein Kurzschlussläufer oder ein Läufer mit einer Läuferwicklung. Zwischen dem Statorsegment 20 und dem Läuferelement 30 erstreckt sich ein Luftspalt 21 mit einer Luftspaltlänge. In der schematischen Darstellung sind vier Statorsegmente 20 dargestellt, von denen nur eines mit detaillierten Bezugszeichen versehen ist.

Problematisch bei derartigen Linearantrieben ist neben einem mechanischen Schaden des Läufers die Möglichkeit eines Wicklungskurzschlusses in einer Statorwicklung. Ähnlich dem Wirkprinzip einer Wirbelstrombremse induziert in diesem Fall ein gegenüber der Statorwicklung bewegter Läufer eine Induktionsspannung und aufgrund einer kurzgeschlossenen Statorwicklung einen Induktionsstrom, dessen magnetische Kraftwirkung gemäß der Regel von Lenz der Induktionsursache entgegen wirkt und die Bewegung des Läufers und somit des Fahrkorbs stark verzögert. Auch kann ein Defekt im Wechselrichter eine spontane Umkehrung der Antriebskraft und damit eine massive Verzögerung bewirken. Diese Verzögerung kann bei schnellen Fahrgeschwindigkeiten eine Gefahr darstellen.

Eine Sicherheitseinrichtung 40 des erfindungsgemäßen elektromagnetischen Linearantriebs 80 soll daher eingreifen, wenn mindestens ein Läuferelement 30 insbesondere bei Aufwärtsfahrt durch einen elektrischen oder mechanischen Fehler beim Überfahren eines Statorsegments 20 eine voreingestellte Verzögerung erreicht oder überschreitet.

Die Sicherheitseinrichtung 40 ermöglicht eine geführte bewegliche Lagerung des Läuferelements 30 an dem Läufer 70. Das Läuferelement 30 ist hierfür grundsätzlich zwischen einer ersten Stellung 61 und einer zweiten Stellung 62 bewegbar. Die beiden Stellungen 61, 62 relativ zueinander sind am linken Bildrand der Figur 1 schematisch ein Einzelheit dargestellt. In der ersten Stellung 61 ist das Läuferelement näher am Stator 10 angeordnet und damit deutlich stärker dem magnetischen Einfluss des Stators ausgesetzt als in der zweiten Stellung 62.

Wie in Figur 1 dargestellt greift in dieser Ausgestaltung eine Anordnung beabstandeter Bolzen 60 an dem Läuferelement 30 in eine entsprechend beabstandete Anordnung paralleler Langlöcher 50 an dem Läufer 70 ein und ist in diesen parallel verschiebbar. Die parallelen Langlöcher 50 erlauben eine geführte Bewegung des Läuferelements 30 gegenüber dem Läufer 70. Die Langlöcher 50 sind in einem spitzen Winkel zur Bewegungsrichtung des Läufers 70 angeordnet, so dass eine Verschiebung des Läuferelements 30 entgegen der Bewegungsrichtung des Läufers 70 das Läuferelement 30 schräg zur Bewegungsrichtung des Läufers 70 von dem Statorsegment 20 entfernt, so dass die magnetische Kraftwirkung in Bewegungsrichtung des Läufers 70 unterbrochen oder zumindest stark reduziert ist.

. Die Bolzen 60 können sowohl am Läufer 70 wie auch am Läuferelement 30 angeordnet sein, wenn das jeweils andere Element die entsprechend beabstandeten Langlöcher 50 aufweist.

Dabei ist der Winkel der parallelen Langlöcher 50 zur Bewegungsrichtung des Läufers 70 vorteilhaft so zu wählen, dass einerseits eine ausreichende Querbewegung entsteht, um das Läuferelement 30 aus dem Kraftfeld zu entfernen, andererseits aber die Zwangskraft ausreicht, um das Läuferelement 30 entgegen der Transversalkomponente der Magnetkraft aus dem Feld des Statorsegments 20 herauszubewegen. Vorgeschlagen wird ein Winkel zwischen 5 und 45 Grad, insbesondere zwischen 15 und 30 Grad.

Durch die Verlagerung des Läuferelements 30 aus der ersten Stellung in die zweite Stellung wird die Kraftwirkung zwischen dem Läuferelement 30 und dem Statorsegment 20 in Bewegungsrichtung des Läufers 70 unterbrochen oder zumindest so weit herabgesetzt, dass keine starke Verzögerung des Fahrkorbs 71 mehr bewirkt werden kann. Bei geeigneter Auslegung des Linearantriebs kann der Fahrkorb 71 mit den verbleibenden Statorsegmenten seine Fahrt fortsetzen. Vorteilhaft sind an den Läuferelementen 30 weiterhin Rückstellelemente 120 angeordnet, welche die Läuferelemente 30 in den Langlöchern 50 zurückstellen können, sobald das fehlerhafte Statorsegment 20 überfahren ist und/oder die Beaufschlagung des Läuferelements 30 in die zweite Stellung entfällt.

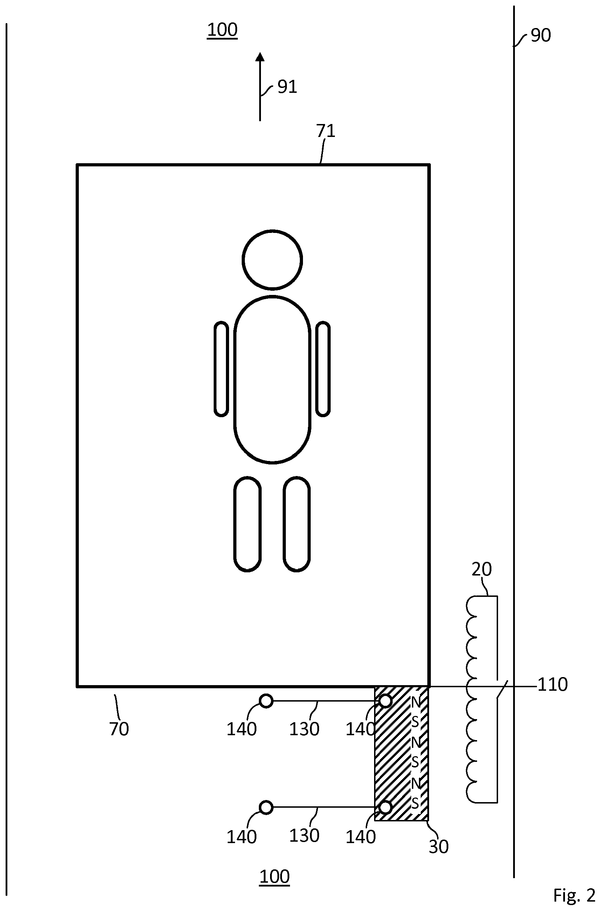

Figur 2 zeigt eine schematische Darstellung einer weiteren Aufzuganlage 100 mit einem Fahrkorb 71, der in einem Aufzugsschacht 90 bewegbar ist. Gleiche Bauteile, wie sie bereits in Zusammenhang mit Figur 1 beschrieben wurden, sind mit gleichen Bezugszeichen versehen und werden nicht noch einmal im Einzelnen eingeführt. In diesem Ausführungsbeispiel ist das Läuferelement 30 an dem Läufer 70 schwenkbar gelagert. Die Bewegung des Läuferelements 30 in Bezug auf das Statorsegment 20 wird durch eine Anordnung paralleler Dreharme 130 ermöglicht, die mittels am Läufer 70 und an dem Läuferelement 30 angeordneter Drehlager 140 das Läuferelement 30 im Fehlerfall aus dem magnetischen Kraftfeld herausschwenken und die Kraftwirkung unterbrechen. Vorteilhaft weisen die Drehlager 140 eine Endposition 110 auf, die beispielsweise an der Bodenplatte des Läufers 70 angeordnet sein kann. Figur 2 zeigt das Läuferelement 30 in der ersten Stellung; die zweite Stellung ist hier nicht explizit eingezeichnet; in der zweiten Stellung ist das Läuferelement 30 im Uhrzeigersinn nach unten weggeschwenkt, wodurch der Abstand zum Statorsegment vergrößert wird.

Die Länge der Dreharme 130 kann auch unterschiedlich sein und anstelle eines Parallelogramms ein allgemeines Viereck darstellen, so dass neben der Schwenkbewegung eine zusätzliche Rotation des Läuferelements 30 auftritt. Ebenso können Drehvorrichtungen und Verschiebevorrichtungen, insbesondere Dreharme, Langlöcher, Schienen und Bolzen miteinander kombiniert werden, beispielsweise indem Drehlager und kreissegmentförmige Langlöcher zusammenwirken.

Vorteilhaft sind in den Drehlagern 140 oder an den Dreharmen 130 zusätzlich Dämpferelemente 120 und Rückstellelemente 121 angeordnet (siehe Figur 1).

Ebenso ist eine Halterung mit einer Sollbruchstelle vorstellbar. Um die Komponente nach einem Bruch an der Sollbruchstelle nicht zu verlieren, könnte die Komponente durch ein Stahlseil gesichert werden. Anstelle einer Sollbruchstelle könnte auch eine Raste mit Rollenfederdruckelement zum Einsatz kommen. Dieser Ansatz ist von Vorteil bei Fahrsteigen.

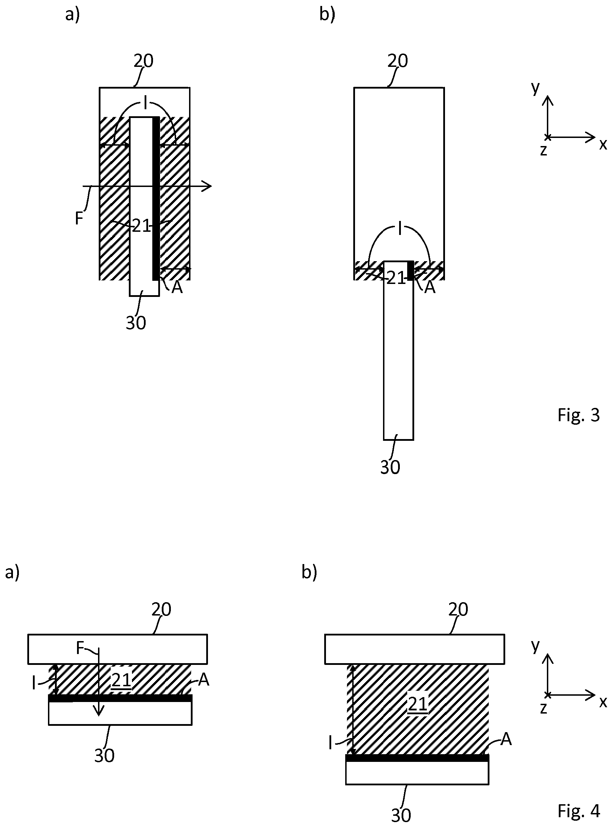

Anhand der Figur 3 wird eine Möglichkeit zur Vergrößerung des magnetischen Widerstandes schematisch erläutert. In Figur 3a ist schematisch das Statorsegment 20 und die Läufereinheit 30 dargestellt. Das Statorsegment 20 weist dabei einen U-förmigen Aufnahmeraum auf, in den das Läuferelement 30 eingreift. F gibt die Richtung des magnetischen Flusses an. Durch die spezifische Überlappung zwischen Statorsegment 20 und Läuferelement 30 ergibt sich eine Luftspaltlänge l und eine Querschnittsfläche A des Luftspaltes 21. Als Luftspalt 21 und Luftspaltlänge l ist hier die Summe der links und rechts des Läuferelements gezeigten Bereiche bzw. Teillängen zu verstehen. Figur 3a zeigt dabei die Läufereinheit in der ersten Stellung. Durch entsprechende Lagerung kann die Läufereinheit 30 in eine zweite Stellung verlagert werden, wie sie in Figur 3b gezeigt ist. Die Luftspaltlänge l verbleibt dabei unverändert, allerding ist die Querschnittsfläche A deutlich reduziert.

Anhand der Figur 4 wird eine weitere Möglichkeit zur Vergrößerung des magnetischen Widerstandes schematisch erläutert. In Figur 4a ist schematisch das Statorsegment 20 und die Läufereinheit 30 dargestellt. Das Statorsegment 20 ist parallel zum Läuferelement 30 angeordnet. Durch die spezifische Anordnung zwischen Statorsegment 20 und Läuferelement 30 ergibt sich eine Luftspaltlänge l und eine Querschnittsfläche A des Luftspaltes 21. Figur 4a zeigt dabei die Läufereinheit in der ersten Stellung. Durch entsprechende Lagerung kann die Läufereinheit 30 in eine zweite Stellung verlagert werden, wie sie in Figur 4b gezeigt ist. Die Luftspaltlänge l wird dabei deutlich vergrößert; die Querschnittsfläche des Luftspaltes verbleibt weitgehend unverändert.

Entscheidend ist hierbei grundsätzlich, dass die Verlagerung von der ersten Stellung in die zweite Stellung in einer anderen Richtung als der Antriebsrichtung erfolgt, insbesondere mit zumindest einer Richtungskomponente quer zur Antriebsrichtung. Im vorliegenden Fall der Figuren 3 und 4 ist die Antriebsrichtung parallel zur z-Richtung, das Läuferelement 30 wird aber parallel zur y-Richtung verlagert. Natürlich kann das Läuferelement 30 zusätzlich auch parallel zur z-Richtung verlagert werden.

## Patentansprüche

1. Transporteinrichtung, nämlich Aufzugsanlage, Fahrtreppe oder Fahrsteig, umfassend
   eine Personenbeförderungseinheit (71), nämlich Fahrkorb oder Palette,
   einen elektromagnetischen Linearantrieb (80) zum Antreiben der Personenbeförderungseinheit (71), mit wenigstens einem Statorsegment (20) und wenigstens einem Läuferelement (30),
   wobei das Läuferelement (30) durch die Kraftwirkung eines elektromagnetischen Feldes des überfahrenen Statorsegments (20) in einer ersten Antriebsrichtung (91) oder in einer entgegengesetzten zweiten Antriebsrichtung (92) antreibbar ist, wobei das Läuferelement (30) an der Personenbeförderungseinheit (71) derart beweglich gelagert ist, dass ein magnetischer Widerstand im Luftspalt (21) zwischen dem überfahrenen Statorsegment (20) und dem Läuferelement (30) veränderlich ist, **dadurch gekennzeichnet, dass** der magnetische Widerstand im Luftspalt zwischen dem überfahrenen Statorsegment und dem Läuferelement in Abhängigkeit von einer zwischen dem Statorsegment und dem Läuferelement wirkenden Antriebskraft veränderlich ist.

2. Transporteinrichtung nach Anspruch 1, **dadurch gekennzeichnet, dass** das Läuferelement (30) zwischen einer ersten Stellung (61) und einer zweiten Stellung (62) beweglich gelagert ist.

3. Transporteinrichtung nach Anspruch 2, **dadurch gekennzeichnet, dass** der magnetische Widerstand im Luftspalt (21) zwischen dem überfahrenen Statorsegment (20) und dem Läuferelement (30) in der ersten Stellung (61) kleiner ist als in der zweiten Stellung (62).

4. Transporteinrichtung nach Anspruch 2 oder 3, **dadurch gekennzeichnet, dass** das Läuferelement (30) derart gelagert ist, dass das Läuferelement (30) bei Vorliegen einer Antriebskraft in der ersten Antriebsrichtung (91), insbesondere in Aufwärtsrichtung oder Vorwärtsrichtung, in die erste Stellung (61) beaufschlagt wird.

5. Transporteinrichtung nach einem der Ansprüche 2 bis 4, **dadurch gekennzeichnet, dass** das Läuferelement (30) derart gelagert ist, dass das Läuferelement (30) bei Vorliegen einer Antriebskraft in der zweiten Antriebsrichtung (92), insbesondere in Abwärtsrichtung oder Rückwärtsrichtung, in die zweite Stellung (62) beaufschlagt wird.

6. Transporteinrichtung nach Anspruch 4 oder 5, **dadurch gekennzeichnet, dass** eine Beaufschlagung des Läuferelementes (30) in die erste bzw. zweite Stellung durch die zwischen dem Statorsegment (20) und dem Läuferelement (30) vorliegende Antriebskraft selbst erfolgt.

7. Transporteinrichtung nach einem der vorstehenden Ansprüche, **dadurch gekennzeichnet, dass** das Läuferelement (30) abweichend von der Antriebsrichtung, insbesondere quer oder schräg zur Antriebsrichtung, insbesondere unter einem vorbestimmten Winkel zur Antriebsrichtung oder auf einer vorbestimmten Bahnkurve oder auf einem vorbestimmten Kreisbogensegment bewegbar ist, wobei insbesondere ein vorbestimmter Winkel zwischen der Bewegungsrichtungen des Läuferelements (30) und der Antriebsrichtung insbesondere zwischen 5 und 45 Grad, vorzugsweise zwischen 15 und 30 Grad beträgt.

8. Transporteinrichtung nach einem der vorstehenden Ansprüche, **dadurch gekennzeichnet, dass** das Läuferelement (30) geradlinig verschiebbar und/oder verschwenkbar ist.

9. Transporteinrichtung nach einem der vorstehenden Ansprüche, **dadurch gekennzeichnet, dass** der Läufer (70) wenigstens zwei parallele Langlöcher (50) aufweist, die in einem spitzen Winkel zu der Bewegungsrichtung des Läufers (70) angeordnet sind, wobei das Läuferelement (30) durch wenigstens zwei beabstandete Bolzen (60) in den parallelen Langlöchern (50) derart verschiebbar gelagert ist, dass das Läuferelement (30) bei einem Erreichen oder Überschreiten einer voreingestellten Verzögerung des Läuferelements (30) durch eine Verschiebung in den parallelen Langlöchern (50) von dem überfahrenen Statorsegment (20) entfernt und aus dem elektromagnetischen Feld des überfahrenen Statorsegments (20) herausgeführt wird.

10. Transporteinrichtung nach einem der vorstehenden Ansprüche, **dadurch gekennzeichnet, dass** das Läuferelement (30) wenigstens zwei parallele Langlöcher (50) aufweist, die in einem spitzen Winkel zu der Bewegungsrichtung des Läufers (70) angeordnet sind, wobei der Läufer (70) durch wenigstens zwei beabstandete Bolzen (60) in den parallelen Langlöchern (50) derart verschiebbar gelagert ist, dass das Läuferelement (30) bei einem Erreichen oder Überschreiten einer voreingestellten Verzögerung des Läuferelements (30) durch eine Verschiebung in den parallelen Langlöchern (50) von dem überfahrenen Statorsegment (20) entfernt und aus dem elektromagnetischen Feld des überfahrenen Statorsegments (20) herausgeführt wird.

11. Transporteinrichtung nach einem der vorstehenden Ansprüche, **dadurch gekennzeichnet, dass** das Läuferelement (30) mittels Dreharmen (130) am Läufer (70) angeordnet ist.

12. Transporteinrichtung nach einem der vorstehenden Ansprüche, wobei das Läuferelement (30) ein permanentmagnetisches Läuferelement ist.

13. Transporteinrichtung nach einem der vorstehenden Ansprüche, wobei die Lagerung des Läuferelements (30) eine Endposition (110) aufweist.

14. Transporteinrichtung nach einem der vorstehenden Ansprüche, wobei die Lagerung des Läuferelements (30) Dämpferelemente (120) aufweist.

15. Transporteinrichtung nach einem der vorstehenden Ansprüche, wobei die Lagerung des Läuferelements (30) Rückstellelemente (121) aufweist, welche das Läuferelement (30), bei entfallener Beaufschlagung in die zweite Stellung, in die erste Stellung beaufschlagen.

16. Transporteinrichtung nach einem der vorstehenden Ansprüche, wobei die voreingestellte Verzögerung des Läuferelements (30) bei Aufwärtsfahrt maximal der Erdbeschleunigung entspricht.

**Claims**

1. Transportation device, namely an elevator installation, escalator or moving walkway, comprising a person-conveying unit (71), namely an elevator car or platform, an electromagnetic linear drive (80) for driving the person-conveying unit (71), having at least one stator segment (20) and at least one runner element (30),
   wherein the runner element (30) can be driven in a first drive direction (91) or in an opposite second drive direction (92) by the action of force of an electromagnetic field of the stator segment (20) being travelled over,
   wherein
   the runner element (30) is mounted movably on the person-conveying unit (71) in such a way that a magnetic resistance in the air gap (21) between the stator segment (20) being travelled over and the runner element (30) can be varied, **characterized in that** the magnetic resistance in the air gap between the stator segment being travelled over and the runner element can be varied in a manner dependent on a drive force acting between the stator segment and the runner element.

2. Transportation device according to Claim 1, **characterized in that** the runner element (30) is mounted so as to be movable between a first position (61) and a second position (62).

3. Transportation device according to Claim 2, **characterized in that** the magnetic resistance in the air gap (21) between the stator segment (20) being travelled over and the runner element (30) is smaller in the first position (61) than in the second position (62).

4. Transportation device according to Claim 2 or 3, **characterized in that** the runner element (30) is mounted in such a way that the runner element (30) is forced into the first position (61) in the presence of a drive force in the first drive direction (91), in particular in the upward direction or forward direction.

5. Transportation device according to one of Claims 2 to 4, **characterized in that** the runner element (30) is mounted in such a way that the runner element (30) is forced into the second position (62) in the presence of a drive force in the second drive direction (92), in particular in the downward direction or backward direction.

6. Transportation device according to Claim 4 or 5, **characterized in that** a forcing of the runner element (30) into the first or second position is performed by the drive force itself which is present between the stator segment (20) and the runner element (30).

7. Transportation device according to any of the preceding claims, **characterized in that** the runner element (30) is movable other than in the drive direction, in particular transversely or obliquely with respect to the drive direction, in particular at a predetermined angle with respect to the drive direction or on a predetermined trajectory or on a predetermined circular arc segment, wherein in particular a predetermined angle between the directions of movement of the runner element (30) and the drive direction amounts to in particular between 5 and 45 degrees, preferably between 15 and 30 degrees.

8. Transportation device according to any of the preceding claims, **characterized in that** the runner element (30) is rectilinearly displaceable and/or pivotable.

9. Transportation device according to any of the preceding claims, **characterized in that** the runner (70) has at least two parallel elongated holes (50), which are arranged at an acute angle with respect to the movement direction of the runner (70), wherein the runner element (30) is mounted displaceably by means of at least two spaced-apart bolts (60) in the parallel elongated holes (50) in such a way that, if a preset deceleration of the runner element (30) is attained or exceeded, the runner element (30) is, by means of a displacement in the parallel elongated holes (50), moved away from the stator segment (20) being travelled over and is moved out of the electromagnetic field of the stator segment (20) being travelled over.

10. Transportation device according to any of the preceding claims, **characterized in that** the runner element (30) has at least two parallel elongated holes (50) which are arranged at an acute angle with respect to the movement direction of the runner (70), wherein the runner (70) is mounted displaceably by means of at least two spaced-apart bolts (60) in the parallel elongated holes (50) in such a way that, if a preset deceleration of the runner element (30) is attained or exceeded, the runner element (30) is, by means of a displacement in the parallel elongated holes (50), moved away from the stator segment (20) being travelled over and is moved out of the electromagnetic field of the stator segment (20) being travelled over.

11. Transportation device according to any of the preceding claims, **characterized in that** the runner element (30) is arranged on the runner (70) by means of rotary arms (130).

**12.** Transportation device according to any of the preceding claims, wherein the runner element (30) is a permanently magnetic runner element.

**13.** Transportation device according to any of the preceding claims, wherein the mounting of the runner element (30) has an end position (110).

**14.** Transportation device according to any of the preceding claims, wherein the mounting of the runner element (30) has damper elements (120).

**15.** Transportation device according to any of the preceding claims, wherein the mounting of the runner element (30) has restoring elements (121) which force the runner element (30) into the first position in the event of withdrawal of force into the second position.

**16.** Transportation device according to any of the preceding claims, wherein the preset deceleration of the runner element (30) during upward travel corresponds at most to gravitational acceleration.

**Revendications**

**1.** Système de transport, à savoir installation d'ascenseur, escalier roulant ou tapis roulant, comprenant une unité de transport de personnes (71), à savoir une cabine ou une palette,
un entraînement linéaire électromagnétique (80) pour l'entraînement de l'unité de transport de personnes (71), avec au moins un segment de stator (20) et au moins un élément de rotor (30), l'élément de rotor (30) pouvant être entraîné par l'action d'une force d'un champ électromagnétique du segment de stator parcouru (20), dans une première direction d'entraînement (91) ou dans une deuxième direction d'entraînement opposée (92), l'élément de rotor (30) étant supporté de manière déplaçable au niveau de l'unité de transport de personnes (71) de telle sorte qu'une résistance magnétique dans l'entrefer (21) entre le segment de stator parcouru (20) et l'élément de rotor (30) soit variable, **caractérisé en ce que** la résistance magnétique dans l'entrefer entre le segment de stator parcouru et l'élément de rotor est variable en fonction d'une force d'entraînement agissant entre le segment de stator et l'élément de rotor.

**2.** Système de transport selon la revendication 1, **caractérisé en ce que** l'élément de rotor (30) est supporté de manière déplaçable entre une première position (61) et une deuxième position (62).

**3.** Système de transport selon la revendication 2, **caractérisé en ce que** la résistance magnétique dans l'entrefer (21) entre le segment de stator parcouru (20) et l'élément de rotor (30) dans la première position (61) est inférieure à la résistance magnétique dans la deuxième position (62).

**4.** Système de transport selon la revendication 2 ou 3, **caractérisé en ce que** l'élément de rotor (30) est supporté de telle sorte que l'élément de rotor (30), en présence d'une force d'entraînement dans la première direction d'entraînement (91), en particulier dans la direction vers le haut ou dans la direction vers l'avant, soit sollicité dans la première position (61).

**5.** Système de transport selon l'une quelconque des revendications 2 à 4, **caractérisé en ce que** l'élément de rotor (30) est supporté de telle sorte que l'élément de rotor (30), en présence d'une force d'entraînement dans la deuxième direction d'entraînement (92), en particulier dans la direction vers le bas ou dans la direction vers l'arrière, soit sollicité dans la deuxième position (62).

**6.** Système de transport selon la revendication 4 ou 5, **caractérisé en ce qu'**une sollicitation de l'élément de rotor (30) dans la première ou dans la deuxième position par la force d'entraînement s'appliquant entre le segment de stator (20) et l'élément de rotor (30) s'effectue automatiquement.

**7.** Système de transport selon l'une quelconque des revendications précédentes, **caractérisé en ce que** l'élément de rotor (30) peut être déplacé à l'écart de la direction d'entraînement, en particulier transversalement ou obliquement par rapport à la direction d'entraînement, en particulier suivant un angle prédéfini par rapport à la direction d'entraînement ou sur une courbe de trajectoire prédéfinie ou sur un segment d'arc de cercle prédéfini, notamment un angle prédéfini entre les directions de déplacement de l'élément de rotor (30) et la direction d'entraînement étant notamment compris entre 5 et 45 degrés, de préférence entre 15 et 30 degrés.

**8.** Système de transport selon l'une quelconque des revendications précédentes, **caractérisé en ce que** l'élément de rotor (30) peut être déplacé en ligne droite et/ou peut être pivoté.

**9.** Système de transport selon l'une quelconque des revendications précédentes, **caractérisé en ce que** le rotor (70) présente au moins deux trous oblongs parallèles (50) qui sont disposés suivant un angle aigu par rapport à la direction de déplacement du rotor (70), l'élément de rotor (30) étant supporté de manière déplaçable par au moins deux boulons espacés (60) dans les trous oblongs parallèles (50) de telle sorte que l'élément de rotor (30), une fois qu'il atteint ou dépasse un ralentissement préajusté de l'élément de rotor (30), soit éloigné, par un déplacement dans les trous oblongs parallèles (50), du segment de stator parcouru (20) et soit guidé hors du champ électromagnétique du segment de stator parcouru (20) .

10. Système de transport selon l'une quelconque des revendications précédentes, **caractérisé en ce que** l'élément de rotor (30) présente au moins deux trous oblongs parallèles (50) qui sont disposés suivant un angle aigu par rapport à la direction de déplacement du rotor (70), le rotor (70) étant supporté de manière déplaçable par au moins deux boulons espacés (60) dans les trous oblongs parallèles (50) de telle sorte que l'élément de rotor (30), une fois qu'il atteint ou dépasse un ralentissement préajusté de l'élément de rotor (30), soit éloigné, par un déplacement dans les trous oblongs parallèles (50), du segment de stator parcouru (20) et soit guidé hors du champ électromagnétique du segment de stator parcouru (20) .

11. Système de transport selon l'une quelconque des revendications précédentes, **caractérisé en ce que** l'élément de rotor (30) est disposé sur le rotor (70) au moyen de bras rotatifs (130).

12. Système de transport selon l'une quelconque des revendications précédentes, dans lequel l'élément de rotor (30) est un élément de rotor à aimantation permanente.

13. Système de transport selon l'une quelconque des revendications précédentes, dans lequel le support de l'élément de rotor (30) présente une position d'extrémité (110).

14. Système de transport selon l'une quelconque des revendications précédentes, dans lequel le support de l'élément de rotor (30) présente des éléments d'amortissement (120).

15. Système de transport selon l'une quelconque des revendications précédentes, dans lequel le support de l'élément de rotor (30) présente des éléments de rappel (121) qui sollicitent l'élément de rotor (30) dans la première position en cas d'absence de sollicitation dans la deuxième position.

16. Système de transport selon l'une quelconque des revendications précédentes, dans lequel le ralentissement préajusté de l'élément de rotor (30), lors d'une conduite vers le haut, correspond au maximum à l'accélération de la pesanteur.

Fig. 1

100

Fig. 2

a)

b)

Fig. 3

a)

b)

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5234079 A
- US 6425462 B1
- US 2004216960 A1